# EUROPÄISCHE PATENTSCHRIFT

(11) **EP 4 357 026 B1**
(45) Veröffentlichungstag und Bekanntmachung des Hinweises auf die Patenterteilung: **22.07.2026**
(21) Anmeldenummer: 23203866.1
(22) Anmeldetag: 14.10.2022
(51) Int. Cl.: B05B 1/00

(54) **DÜSE MIT EINEM ERSTEN DURCHGRIFF UND DEN ERSTEN DURCHGRIFF UMGEBENDE ZWEITE DURCHGRIFFE SOWIE DÜSENANORDNUNG**
NOZZLE WITH A FIRST GRIP AND A SECOND GRIP SURROUNDING THE FIRST GRIP AND NOZZLE ASSEMBLY
BUSE COMPRENANT UNE PREMIÈRE POIGNÉE ET UNE PREMIÈRE SECONDE POIGNÉE ENVIRONNANTE ET ENSEMBLE BUSE

(43) Veröffentlichungstag der Anmeldung: 24.04.2024
(62) Teilanmeldung aus: 22201608.1
(73) Patentinhaber: ESTA Apparatebau GmbH & Co. KG, 89250 Senden (DE)
(72) Erfinder: NOVOSEL, Michael, 89564 Nattheim (DE); HERRMANN, Maik, 89275 Elchingen (DE); HAHN, Johann Paul, 89165 Dietenheim (DE)
(74) Vertreter: AURODION PartmbB

(56) Entgegenhaltungen:
- WO-A1-2012/074901
- DE-A1- 2 528 758
- US-A1- 2004 124 283
- US-A1- 2017 050 206

## Beschreibung

### Technisches Gebiet

Die vorliegende Erfindung betrifft eine Düsenanordnung mit einer Rohrleitung und einer daran befestigten Düse.

### Hintergrund der Erfindung

Düsen sind mit vielfältigen Geometrien und für vielfältige Zwecke aus dem Stand der Technik bereits bekannt, insbesondere als Luftdüsen oder Flüssigkeitsdüsen.

Bei der Reinigung von Filterelementen, wie beispielsweise Kartuschenfiltern, Taschenfiltern, Flachfiltern oder zylinderförmigen Filtern, wird eine gezielt geführte Fluidströmung zum Entfernen eines Filterkuchens von dem Filterelement eingesetzt. Beispielsweise erfolgt die Reinigung durch Rückströmung, wie etwa aus DE 44 23 439 A1 bekannt. Die Reinigung kann jedoch auch erfolgen, indem das Fluid quer zu einer Oberfläche des Filterelements, an der sich der Filterkuchen absetzt, an dieser entlanggeführt wird, um den Filterkuchen abzuscheren. Die Reinigung eines Filters mittels Luftströmung ist beispielsweise auch aus DE 20 2013 100 593 U1 bekannt.

Bei den genannten Reinigungsverfahren, insbesondere bei zylinderförmigen Filterelementen, bei denen die Fluidströmung quer zu einer inneren Mantelfläche und in Richtung der Mittelachse des zylinderförmigen Filterelements geführt wird, werden Düsen zum Erzeugen bzw. Führen einer bestimmten Fluidströmung eingesetzt. Beispielsweise werden dabei mittels Magnetventilen aus einem Drucklufttank oder einer Druckluftleitung Luftstöße abgelassen und durch die Düse auf das Filterelement geführt. Nachteilig erfolgt dabei die Strömungsführung oft nicht ausreichend gleichmäßig über die zu reinigende Oberfläche und/oder mit zu geringem Impuls zum vollflächigen Reinigen der Oberfläche. Insbesondere kann ein ausreichender Impuls bzw. eine ausreichende Scherwirkung nicht mehr über einen bestimmten Abstand von der Düse hinaus erreicht werden.

Weiterhin nachteilhaft sind bekannte Düsen oft fest in einer entsprechenden Düsenanordnung montiert und dann nur schwer von der Zuleitung bzw. aus der Düsenanordnung zu lösen, beispielsweise für eine Wartung oder einen Austausch.

Aus US 2004/0124283 A1 ist eine Verzweigungseinheit für eine Feldspritze bekannt, die im Bereich eines Eingangs an einem Zapfloch einer Rohrleitung anliegt und mehrere Leitungsabschnitte, mehrere Ausgänge und an den Ausgängen angeordnete Düsen zum Ausbringen eines Fluids aufweist. Aus WO 2012/074901 A1 ist eine ähnliche Verzweigungseinheit bekannt, die integrierte Austrittsdüsen aufweist. Eine ebenfalls ähnliche Verzweigungseinheit ist beispielsweise aus US 2017/0050206 A1 bekannt.

Aus DE 25 28 758 A1 ist weiterhin eine Haltevorrichtung zum Halten einer Düse an einer Mantelfläche einer Rohrleitung im Bereich einer Querbohrung mit einer Rohrleitung, einer Düse, einem elastischen Zwischenstück und einem Metallband bekannt.

### Beschreibung der Erfindung

Ausgehend von dieser Situation ist es eine Aufgabe der vorliegenden Erfindung, eine Düsenanordnung vorzuschlagen, die einfach zu handhaben ist.

Die Aufgabe der Erfindung wird durch die Merkmale der unabhängigen Hauptansprüche gelöst. Vorteilhafte Ausgestaltungen sind in den Unteransprüchen angegeben. Sofern technisch möglich, können die Lehren der Unteransprüche beliebig mit den Lehren der Haupt- und Unteransprüche kombiniert werden.

Nachfolgend werden Vorteile der beanspruchten Erfindungsaspekte erläutert und weiter nachfolgend bevorzugte modifizierte Ausführungsformen der Erfindungsaspekte beschrieben. Erläuterungen, insbesondere zu Vorteilen und Definitionen von Merkmalen, sind dem Grunde nach beschreibende und bevorzugte, jedoch nicht limitierende Beispiele. Sofern eine Erläuterung limitierend ist, wird dies ausdrücklich erwähnt.

Soweit Elemente mit Hilfe einer Nummerierung bezeichnet sind, also beispielsweise "erstes Element", "zweites Element" und "drittes Element", so ist diese Nummerierung rein zur Differenzierung in der Bezeichnung vorgesehen und stellt keine Abhängigkeit der Elemente voneinander oder eine zwingende Reihenfolge der Elemente dar. Das heißt insbesondere, dass beispielsweise ein eine Vorrichtung oder ein Verfahren nicht ein "erstes Element" aufweisen muss, um ein "zweites Element" aufweisen zu können. Auch kann die Vorrichtung bzw. das Verfahren ein "erstes Element", sowie ein "drittes Element" aufweisen, ohne aber zwangsläufig ein "zweites Element" aufzuweisen. Es können auch mehrere Einheiten eines Elements einer einzelnen Nummerierung vorgesehen sein, also beispielsweise mehrere "erste Elemente".

Nach einem Aspekt der Erfindung wird die Aufgabe gelöst durch eine Düsenanordnung zur Reinigung eines Filterelements mittels einer Fluidströmung, aufweisend zumindest eine rohrförmig ausgebildete Zuleitung mit einer Zuleitungsöffnung in einer Mantelfläche der Zuleitung, zumindest eine als Hohlkörper mit einer Grundfläche ausgebildete Düse, wobei die Düse in der Grundfläche eine Einlassöffnung aufweist und zumindest eine Düsenhalterung mit einer Aufnahme für die Düse, wobei die Düse an der Grundfläche eine Ausnehmung zum Anlegen an die Mantelfläche der Zuleitung aufweist, derart, dass die Einlassöffnung an der Zuleitung anliegt und mit der Zuleitungsöffnung fluchtet und wobei die Düse an der Aufnahme der Düsenhalterung lösbar gehalten und zentriert ist und die Düsenhalterung an der Zuleitung lösbar gehalten ist. Die Zuleitung ist beispielsweise mit einem Drucktank oder einer Druckleitung verbunden.

Als rohrförmig wird dabei eine Geometrie verstanden, die sich als Profil hauptsächlich in einer Längsrichtung erstreckt. Dabei ist das Profil als beliebiges Hohlprofil ausgebildet und beispielsweise rund oder mehreckig ausgebildet. Ein Querschnitt des Profils kann über die Längserstreckung gleichbleibend oder variabel sein.

Als eine Düse wird eine Vorrichtung mit einer Einlassseite bzw. einem Einlassquerschnitt und einer Auslassseite bzw. einem Auslassquerschnitt verstanden, wobei ein Fluid an der Einlassseite bzw. durch den Einlassquerschnitt in die Düse einströmt und an der Auslassseite bzw. durch den Auslassquerschnitt aus der Düse ausströmt. Dabei wird der Fluidstrom zwischen Einlassseite/Einlassquerschnitt und Auslassseite/Auslassquerschnitt und insbesondere mittels Düsenöffnungen, die die Auslassseite bzw. den Auslassquerschnitt ausbilden, bezüglich seiner Stömungseigenschaften beeinflusst. Insbesondere wird der Fluidstrom bezüglich der Stömungskontur, bezüglich der Strömungsgeschwindigkeit sowie bezüglich des Massenflusses beeinflusst. Als Strömungskontur wird dabei die Summe der Verläufe der räumlichen Positionen und Geschwindigkeiten verstanden, die die einzelnen Fluidteilchen durchlaufen. Ein Fluid ist insbesondere Luft, ein anderes Gas oder eine Flüssigkeit wie etwa Wasser.

Ein Filterelement ist beispielsweise als zylinderförmiges Filterelement, als Taschenfilter, als Kartuschenfilter oder als Flachfilter ausgebildet und umfasst ein Filtermedium wie etwa ein Vlies oder dergleichen, dass durch einen Teil eines zu filternden Fluidstroms durchlässig und für einen anderen Teil des zu filternden Fluidstroms undurchlässig ist. Beispielsweise werden auf diese Weise Stäube und Partikel aus einem Luftstrom herausgefiltert. Die zurückgehaltenen Teile des zu filternden Fluidstroms bilden dabei an einer vorderen Seite des Filtermediums mit der Zeit bzw. mit der durch das Filtermedium hindurchgeströmten Fluidmenge auf und/oder in dem Filtermedium einen Filterkuchen aus, durch den der Strömungswiederstand für das Fluid anwächst. Eine Reinigung umfasst dabei das zumindest teilweise Entfernen des Filterkuchens von der Oberfläche des Filtermediums, um den Strömungswiderstand (wieder) zu verringern.

Die vorbeschriebene Lösung der Aufgabe umfasst also die Lehre, dass eine Düse mittels einer Düsenhalterung an der Zuleitung gehalten ist, wobei sowohl die Düse an der Düsenhalterung als auch die Düsenhalterung an der Zuleitung jeweils lösbar gehalten ist. Die Düsenhalterung ist dabei derart gestaltet, dass die Düse gegenüber der Düsenhalterung bzw. gegenüber der Zuleitung zentriert ist. Beispielsweise sind an der Düse und der Düsenhalterung dazu entsprechend geformte Zentriermittel vorgesehen. Mittels der Zentrierung ist also eine Flucht der Einlassöffnung der Düse mit der Zuleitungsöffnung erreicht. Mittels der Düsenanordnung ist es zudem vorteilhaft ermöglicht, dass eine Düse mit geringem Aufwand und geringem Werkzeugeinsatz an der Zuleitung angeordnet werden kann. Auf diese Weise kann die Düsenanordnung zum Wechsel einer Düse zur Wartung, zum Wechsel einer Düsengeometrie oder zur Reinigung einfach auseinander und anschließend wieder zusammengebaut werden. Die Düsenanordnung ist zudem in ihrer Gestaltung einfach und kostengünstig herstellbar ausgebildet. Mit der vorbeschriebenen Düsenanordnung ist zudem eine freie Positionierung der Düse an der Rohrleitung je nach Positionierung einer Zuleitungsöffnung ermöglicht.

Durch die vorbeschriebene Ausgestaltung der Düsenanordnung ist die Düse an der Düsenhalterung bzw. an der Zuleitung also in allen Raumrichtungen sicher gehalten, insbesondere auch verdrehsicher gehalten. Auf diese Weise ist ein Verrutschen und/oder Verdrehen der Düse während dem Betrieb der Düsenanordnung verhindert.

Die Zuleitungsöffnung fluchtet bevorzugt quer, insbesondere genau senkrecht zu einer Mittelachse der Zuleitung oder ist von dieser Mittelachse der Zuleitung abgewinkelt orientiert. In einem entsprechend Winkel ist die an der Grundfläche der Düse angeordnete Ausnehmung zum Anlegen an die Mantelfläche der Zuleitung orientiert.

In einer bevorzugten Ausführungsform ist die Düse an der Düsenhaltung formschlüssig gehalten und insbesondere von einer durch die Zuleitung verdeckten Innenseite der Düsenhalterung in die Ausnehmung einlegbar. Durch das formschlüssige Halten ist die Düse besonders einfach an der Düsenhalterung befestigt und zentriert. Dabei ist der Formschluss besonders bevorzugt derart ausgestaltet, dass die Düse darin eine zentrierte Position einnimmt. Durch eine Ausgestaltung, bei der die Düse von einer durch die Zuleitung verdeckten Innenseite der Düsenhalterung in die Ausnehmung einlegbar ist, ist durch die Zuleitung ein einfaches Fixieren der Düse in der Aufnahme ermöglicht, um eine Zentrierung und Sicherung zu erreichen. Es wird dann bei der Montage/Demontage der Düsenanordnung die Düse in die Ausnehmung eingelegt bzw. aus der Aufnahme entnommen, wenn die Düsenhalterung von der Zuleitung gelöst ist.

In einer bevorzugten Ausgestaltung der vorgenannten Ausführungsform weist die Düse einen Kragen auf und ist mittels des Kragens formschlüssig an der Düsenhalterung gehalten. Ein solcher Kragen ermöglicht auf einfache Weise ein zentriertes und sicheres Halten der Düse an der Düsenhalterung, insbesondere, wenn die Düse von einer durch die Zuleitung verdeckten Innenseite der Düsenhalterung in die Ausnehmung einlegbar ist und der Kragen dann im Hintergriff mit der Düsenhalterung steht. Ein Kragen kann weiterhin beispielsweise als Dichtungsfläche und/oder zur Aufnahme eines Dichtungsmittels dienen.

In einer bevorzugten Ausführungsform ist die Düsenhalterung an der Zuleitung kraftschlüssig gehalten und insbesondere schellenförmig an der Zuleitung aufgeklemmt. Auf diese Weise ist ein sicheres und schnell lösbares Halten der Düsenhalterung ermöglicht. Insofern die Düse von einer Innenseite der Düsenhalterung in die Düse einlegbar ist, ist zudem durch die an der Düsenhalterung eingelegt Düse ein Positionieren der Düsenhalterung auf der Zuleitung einfach und ohne Hinderung möglich.

In einer Ausgestaltung der vorgenannten Ausführungsform ist die Düsenhalterung aufklappbar oder aufbiegbar ausgebildet und mittels Verbindungsmitteln in einer zugeklappten/zugebogenen Stellung haltbar und auf der Zuleitung aufklemmbar ausgebildet. Die Düsenhalterung ist dann auch in einer aufgeklappten/aufgebogenen Stellung einstückig und weist keine verlierbaren Teile auf. Zudem ist das Positionieren der Düsenhalterung an der Zuleitung besonders einfach bei aufgeklappter/aufgebogener oder teilweise zugeklappter/zugebogener Düsenhalterung ermöglicht und das Halten der Düsenhalterung an der Zuleitung ist besonders einfach durch Schließen der Verbindungsmittel ermöglicht. Insofern die Düsenhalterung um einen ausreichenden Öffnungswinkel aufklappbar/aufbiegbar ausgebildet ist, ist zudem ein Positionieren der Düsenhalterung an der Zuleitung in radialer Richtung ermöglicht, sodass ein notwendiger Montageraum gering gehalten ist.

In einer Ausführungsform ist eine Mehrzahl von Düsen mittels einer entsprechenden Mehrzahl von Düsenhalterungen an der Zuleitung angeordnet. Die Lehre der beschriebenen Aufgabenlösung ist dann bei einer einzelnen Zuleitung für mehr als eine Düse nutzbar. Insbesondere können so mehrere Filterelemente gleichzeitig gereinigt werden oder ein einzelnes Filterelement kann mittels mehrerer Düsen gereinigt werden. Dabei sind verschiedene Düsen mit verschiedenen Geometrie bzw. verschiedenen Strömungskonturen gleichzeitig verwendbar.

Weiterhin bevorzugt weist die Düse einen in die Zuleitungsöffnung hineinragenden Vorsprung an der Einlassöffnung auf. Auf diese Weise ist eine einfache und sichere Zentrierung der Düse gegenüber der Zuleitung bzw. der Einlassöffnung gegenüber der Zuleitungsöffnung erreicht und eine Flucht der Öffnungen miteinander sichergestellt. Insofern die Einlassöffnung und die Zuleitungsöffnung rund ausgebildet sind, ist eine zusätzliche Verdrehsicherung beispielsweise durch einen entsprechenden Formschluss zwischen Düse und Düsenhalterung ausgebildet.

**In** einer Ausführungsform weist die Düse zumindest einen als hohlen Kegelstumpf ausgebildeten ersten Düsenabschnitt, zumindest einen ersten Durchgriff, wobei der erste Durchgriff in einer Deckfläche des ersten Düsenabschnitts eine erste Düsenöffnung ausbildet, und eine Mehrzahl von den ersten Durchgriff umgebenden zweiten Durchgriffen auf, wobei die zweiten Durchgriffe in der Mantelfläche des ersten Düsenabschnitts zweite Düsenöffnungen ausbilden, wobei die zweiten Durchgriffe zum Aufprägen einer helixförmigen Strömungskontur auf die Fluidströmung jeweils eine gegenüber einer zu einer Mittelachse der Düse parallelen Parallelachse gekippte Durchgriffsachse aufweisen.

Als ein hohler Kegelstumpf wird eine Geometrie verstanden, die eine koaxiale Verbindungsfläche zwischen einer runden Grundfläche und einer gegenüber der Grundfläche kleineren runden Deckfläche bildet. Dabei ist durch die hohle Ausbildung ein der Außenkontur geometrisch entsprechender Innenraum an dem Kegelstumpf ausgebildet, wobei der Innenraum materialfrei ist. Der Kegelstumpf bildet also eine Wandung aus, die die Mantelfläche der Außenkontur und die Mantelfläche der Innenkontur ausbildet. Insbesondere bildet der Innenraum an der Grundfläche eine Einlassöffnung des Kegelstumpfs zum Einlassen eines Fluidstroms aus.

Als Durchgriff wird ein Ausnehmung durch ein Material, insbesondere eine Wandung oder mehrere Wandungen, verstanden, deren Wandungen insbesondere parallel zueinander und insbesondere parallel zu einer Durchgriffsachse ausgebildet sind. Ein Durchgriff kann auch entlang der Durchgriffachse im Querschnitt größer oder kleiner werden, sodass die Wandungen dann beispielsweise nicht genau, jedoch beispielsweise nahezu parallel zueinander sind. Eine Durchgriff definiert sich insbesondere durch eine Richtung der Durchgriffsachse sowie eine Durchgriffsgeometrie. Dabei sind beliebige Durchgriffsgeometrien insbesondere hinsichtlich des Querschnitts möglich, bevorzugt ist ein Durchgriff jedoch als im Querschnitt runde Bohrung mit einem Bohrungsdurchmesser ausgebildet.

Eine Helixform der Strömungskontur bestimmt sich dadurch, dass einzelne Fluidteilchen einem schraubenförmigen Verlauf folgen. Der Strömungskontur bzw. einzelnen Fluidteilchen wird insofern ein Drall aufgeprägt.

Die vorbeschriebene Ausführungsform umfasst nun die technische Lehre, dass eine erste Düsenöffnung zentral an der Deckfläche zum Ausstoßen einer Kernströmung vorgesehen ist und um die erste Düsenöffnung herum mehrere zweite Düsenöffnungen an der Mantelfläche zum Ausstoßen einer Außenströmung vorgesehen sind. Dabei ist die erste Düsenöffnung bzw. der zum Ausbilden der ersten Düsenöffnung vorgesehene erste Durchgriff bevorzugt konzentrisch mit der Mittelachse der Düse angeordnet, weist also eine mit der Mittelachse konzentrische Durchgriffsachse und zu der Mittelachse parallele Wandungen auf. Die Strömungsrichtung der Kernströmung weist somit gerade aus der Düse heraus. Die zweiten Durchgriffe sind derweil jeweils gekippt angeordnet, sodass die Außenströmung einen aufgeprägten Drall bzw. eine aufgeprägte Strömungsrichtung hin zu der Helixform aufweist. Vorteilhaft kann die Kernströmung, die ohne die Außenströmung schon vergleichsweise nah hinter der Düse trichterförmig auffächern würde und somit dann nur noch mit stark reduziertem Impuls auf die Oberfläche des Filterelements wirken würde, durch die helixförmige Außenströmung eingeschnürt bzw. gebündelt und somit gerichtet werden. Durch das Aufprägen der helixförmigen Strömungskontur wird ein Auffächern der Außenströmung verhindert und die Außenströmung wirkt derart auf die gesamte Strömungskontur, dass die Strömungskontur insgesamt eingeschnürt/gebündelt und im Raum stabilisiert ist. Eine derart stabilisierte Strömungskontur kann dann zielgerichteter, insbesondere in vergrößerter Distanz von der Düse an der Oberfläche des Filterelements wirken und einen vergrößerten Impulsanteil an einem gewünschten Bereich der Oberfläche applizieren. Insbesondere ist es ermöglicht, durch die genaue geometrische Ausbildung der Düse, insbesondere durch das Durchmesserverhältnis des ersten Durchgriffs zu den zweiten Durchgriffen, durch die Anzahl und Anordnung der zweiten Durchgriffe und die Wahl von Kippwinkeln, um die die zweiten Durchgriffe jeweils gegenüber den Parallelachsen gekippt sind, die Strömungskontur auf bestimmte Filterelemente jeweils genau anzupassen, insbesondere in ihrem Durchmesser bzw. der Entwicklung des Durchmessers über die axiale Distanz von der Düse. Die Strömungskontur füllt dann das beispielsweise ein zylinderförmiges Filterelement genau aus und es wird an der inneren Oberfläche des zylinderförmigen Filterelements eine besonders günstige Scherung erreicht. Vereinfacht ist also durch das Kippen der zweiten Durchgriffe eine besonders stabile Strömungskontur und eine einfache und präzise Kontrolle über die Richtcharakteristik der Düse ermöglicht, sodass die Richtcharakteristik präzise für eine bestimmte Anwendung ausgewählt werden kann.

In einer Ausgestaltung der vorgenannten Ausführungsform sind die zweiten Durchgriffe auf einer mit der Mittelachse der Düse konzentrischen Kreisbahn angeordnet. Die Strömungskontur ist dann vorteilhaft um die Mittelachse der Düse bzw. um eine konzentrisch dazu ausgerichtete Kernströmung achssymmetrisch und insofern besonders stabil. Zudem eignet sich eine solche Strömungskontur besonders zum Reinigen eines zylinderförmigen Filterelements. Eine solche Zylinderform ist eine Standardgeometrie für Filterelemente beim Filtern von Luftströmen bei industriellen Anwendungen.

Weiterhin vorteilhaft ist bei der Anordnung der zweiten Durchgriffe auf einer mit der Mittelachse konzentrischen Kreisbahn an der Düse, deren zumindest durch den ersten Düsenabschnitt gebildeter Grundkörper im Querschnitt rund ist, eine gleichmäßige Druckverteilung innerhalb der Düse geschaffen, sodass die Matrialbelastung der Düse gering gehalten ist.

In einer weiteren Ausgestaltung der vorgenannten Ausführungsform weist der erste Düsenabschnitt eine konkav verjüngende Mantelfläche auf. Als eine konkave Verjüngung der Mantelfläche bzw. des Kegelstumpfs wird verstanden, dass die Mantelfläche in der axialen Richtung des Kegelstumpfs von der Grundfläche zu der Deckfläche nicht linear sondern in konkaver Weise abnehmend stark verjüngt ausgebildet ist. Insofern wird als Kegelstumpf auch eine Geometrie verstanden, deren Mantelfläche gegenüber einem geometrisch idealen Kegelstumpf eine Konkavität (und/oder Konvexität) der Mantelfläche aufweist. Vorteilhaft wird durch die konkave Verjüngung eine Streckung der zweiten Düsenöffnungen erreicht, sodass sich deren Querschnitt vergrößert und die der Anteil der Außenströmung an der gesamten Strömungskontur gegenüber einer linear verjüngenden Mantelfläche verstärkt wird.

In einer weiteren Ausgestaltung der vorgenannten Ausführungsform weist die Düse einen sich an eine Grundfläche des ersten Düsenabschnitts anschließenden, als Hohlzylinder ausgebildeten zweiten Düsenabschnitt auf. Die Düse ist dann zu ihrer Einlassseite verlängert und weist in dem zweiten Düsenabschnitt einen Innenbereich auf, innerhalb dem die Fluidströmung sich unabhängig von vorgeschalteten Bauteilen laminar einstellen und stabilisieren kann, bevor das Fluid zu den Düsenöffnungen gelangt. Auf diese Weise wird also weiterhin eine stabile und gleichmäßige bzw. achssymmetrische Strömung ermöglicht.

Insbesondere ragen die zweiten Durchgriffe von innen radial nach außen in eine Außenwandung des zweiten Düsenabschnitts zum Ausbilden einer Kontur an einer Innenseite der Außenwandung hinein. Es überschneiden sich also die zweiten Durchgriffe mit der Wandung des zweiten Düsenabschnitts, ohne jedoch deren äußere Kontur zu schneiden. An der Innenseite der Wandung des zweiten Düsenabschnitts entstehen also nutförmige Ausnehmungen. Das Aufprägen eines Dralls bzw. eine helixförmigen Strömungskontur erfolgt dann vorteilhaft bereits innerhalb der Düse, nämlich in dem zweiten Düsenabschnitt, vergleichbar mit dem Aufprägen eines Dralls auf ein Geschoss in einem Gewehr durch in dem Gewehrlauf angeordnete Züge. Auf diese Weise wird die Strömungskontur weiterhin stabilisiert.

Weiterhin insbesondere weist der zweite Düsenabschnitt an einer Grundfläche eine Ausnehmung zum Anlegen an eine winkelig zu der Mittelachse der Düse verlaufenden Zylinderkontur und insbesondere einen Kragen auf. Der zweite Düsenabschnitt kann dann konturpassend an eine Öffnung in einer Seitenwand einer rohrförmigen Zuleitung angelegt werden, sodass zwischen der Zuleitung und der Düse ein besonders strömungsgünstiger und unterbrechungsfreier, insbesondere dichter Übergang ausgebildet ist. Dabei kann die Düse mit ihrer Mittelachse beispielsweise senkrecht oder in einem beliebigen anderen Winkel auf der Zuleitung stehen. Durch das Ausbilden eines Kragens ist eine Anlagefläche der Düse an der Zuleitung beispielsweise zum Vorsehen von Dichtungsmitteln vergrößert. Besonders bevorzugt kann ein solcher Kragen aber auch zum Halten der Düse an der Zuleitung, insbesondere zum formschlüssigen Halten verwendet werden. Der Kragen ist bevorzugt entlang der Ausnehmung zum Anlegen an die Zylinderkontur ausgebildet oder bildet die Kontur selber aus.

In einer weiteren Ausgestaltung der vorgenannten Ausführungsform sind die Durchgriffsachsen der zweiten Durchgriffe jeweils um eine senkrecht auf der Parallelachse stehende und die Mittelachse der Düse schneidende erste Querachse um einen ersten Kippwinkel gekippt angeordnet. Bevorzugt beträgt der erste Kippwinkel 0 bis 45°, besonders bevorzugt 23° Der erste Kippwinkel beträgt beispielsweise 1°, 2°, 3°, 5°, 10°, 15°, 20°, 23°, 25°, 30°, 35°, 40°, 45° oder einen zwischen diesen Werten liegenden Winkel. Durch das Vorsehen des ersten Kippwinkels wird insbesondere die Steigung der helixförmigen Kontur der Außenströmung beeinflusst. Durch den gewählten ersten Kippwinkel wird vorteilhaft eine günstige Einschnürung der Strömungskontur und eine günstige Reichweite der Strömungskontur, also eine ausreichende Distanz von der Düse, bei der die Strömungskontur noch stabil ist, erreicht.

In einer weiteren Ausgestaltung der vorgenannten Ausführungsform sind die Durchgriffsachsen der zweiten Durchgriffe jeweils um eine senkrecht auf der Parallelachse und senkrecht auf der ersten Querachse stehende zweite Querachse um einen zweiten Kippwinkel gekippt angeordnet. Bevorzugt beträgt der zweite Kippwinkel 0 bis 90°, besonders bevorzugt 45°. Der zweite Kippwinkel beträgt beispielsweise 1°, 2°, 3°, 5°, 10°, 15°, 20°, 25°, 30°, 35°, 40°, 45°, 50°, 55°, 60°, 65°, 70°, 75°, 80°, 85°, 90° oder einen zwischen diesen Werten liegenden Winkel. Durch den gewählten zweiten Kippwinkel wird der Durchmesser bzw. die Entwicklung des Durchmessers über die axiale Distanz von der Düse der Strömungskontur beeinflusst. Vorteilhaft kann die Düse in dem gewählten Bereich des zweiten Kippwinkels zur Reinigung der inneren Oberfläche in axialer Richtung einer Vielzahl von zylindrischen Filterelementen eingestellt werden, insbesondere für eine Vielzahl von Längen-zu-DurchmesserVerhältnissen solcher zylindrischen Filterelemente.

Bevorzugt beträgt ein Verjüngungsverhältnis zwischen einem Einlassquerschnitt und einem Auslassquerschnitt der Düse zwischen 1:1 und 3:1. Ein Einlassquerschnitt ist insbesondere durch eine durch den Innenraum an der Grundfläche des ersten Düsenabschnitts oder deszweiten Düsenabschnitts gebildete Einlassöffnung ausgebildet. Ein Auslassquerschnitt ergibt sich als Summe der Querschnitte aller Düsenöffnungen. Bei den genannten Verhältnissen ist ein für die Reinigung von Filterelementen mittels Luftstößen aus einem Drucktank oder einer Druckleitung günstiges Verhältnis zwischen der Strömungsgeschwindigkeit und dem Massenfluss der Luftströmung erreicht.

In einer weiteren Ausgestaltung der vorgenannten Ausführungsform ist der erste Durchgriff rund ausgebildet und weist einen Durchmesser von 1 bis 70% eines Düsendurchmessers auf. Dabei wird der Düsendurchmesser als maximaler äußerer Durchmesser der Düse verstanden. In einer weiteren und bevorzugt mit dieser Ausführungsform kombinierten Ausführungsform sind die zweiten Durchgriffe ebenfalls jeweils rund ausgebildet und weisen einen Durchmesser von 1 bis 70% des Düsendurchmessers auf. Bei den genannten Durchmessern wird eine günstige Strömungskontur für das Reinigen von üblichen zylinderförmigen Filterelementen zur Luftreinigung bei industriellen Anwendungen erreicht. Zudem liegt dann ein günstiges Verhältnis der Kernströmung zu der Außenströmung für eine stabile Strömungskontur mit einer günstigen Reichweite vor.

Bevorzugt ist eine ungerade Anzahl an zweiten Durchgriffen vorgesehen. Es sind dann Punktsymmetrien, die mit sich gegenseitig aufhebenden Effekten einhergehen können, vermieden.

**In** einer weiteren Ausführungsform weist die Düse eine Mehrzahl von jeweils eine Innenkontur der ersten Durchgriffe schneidenden, zur Mittelachse der Düse parallelen dritten Durchgriffe auf. Durch die dritten Durchgriffe erfolgt als eine Konturierung des ersten Durchgriffs, wodurch die Kernströmung bereits in sich eine Bündelung und Richtung erfährt. Vorteilhaft wird so eine besonders gut gerichtete und stabile Strömungskontur erreicht.

Bevorzugt ist eine Düse mittels eines additiven Fertigungsverfahrens hegestellt. Vorteilhaft kann so eine Auswahl eines oder mehrerer Kippwinkels gezielt für die Reinigung eines bestimmten Filterelements eingestellt werden und mit geringem Aufwand hergestellt werden. Insbesondere sind durch die additive Fertigung komplexe Geometrien der Düse bei geringem Herstellungsaufwand ermöglicht.

### Kurze Beschreibung der Zeichnungen

Nachfolgend wird die Erfindung unter Bezugnahme auf die anliegenden Zeichnungen anhand bevorzugter Ausführungsbeispiele näher erläutert. Die Formulierung Figur ist in den Zeichnungen mit Fig. abgekürzt.

**In** den Zeichnungen zeigen
- Fig. 1a: eine perspektivische Ansicht einer Düse gemäß einem ersten Ausführungsbeispiel;
- Fig. 1b: die Düse gemäß Fig. 1a in einer Seitenansicht;
- Fig. 1c: die Düse gemäß Fig. 1a und Fig. 1b in Draufsicht;
- Fig. 1d: die Düse gemäß Fig. 1a, Fig. 1b und Fig. 1c in einer weiteren perspektivischen Ansicht;
- Fig. 2a: eine perspektivische Ansicht einer Düse gemäß einem zweiten Ausführungsbeispiel;
- Fig. 2b: die Düse gemäß Fig. 2a in einer Seitenansicht;
- Fig. 2c: die Düse gemäß Fig. 2a und Fig. 2b in Draufsicht;
- Fig. 2d: die Düse gemäß Fig. 2a, Fig. 2b und Fig. 2c in einer weiteren perspektivischen Ansicht;
- Fig. 3: eine schematische Darstellung einer Düsenanordnung nach einem Aspekt der Erfindung gemäß einem Ausführungsbeispiel;
- Fig. 4a: eine Seitenansicht einer Düse und einer Düsenhalterung für eine Düsenanordnung gemäß Fig. 3;
- Fig. 4b: eine perspektivische Ansicht einer Düsenhalterung gemäß Fig. 3 bzw. Fig. 4a; und
- Fig. 4c: eine perspektivische Ansicht einer Düse gemäß Fig. 3 bzw. Fig. 4a.

### Detaillierte Beschreibung der Zeichnungen

Die beschriebenen Ausführungsbeispiele sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wird, kann eigenständig oder in Kombination mit anderen Merkmalen in einem beliebigen anderen Ausführungsbeispiel genutzt werden. Jedes Merkmal, das für ein Ausführungsbeispiel einer bestimmten Anspruchskategorie beschrieben wird, kann auch in entsprechender Weise in einem Ausführungsbeispiel einer anderen Anspruchskategorie eingesetzt werden.

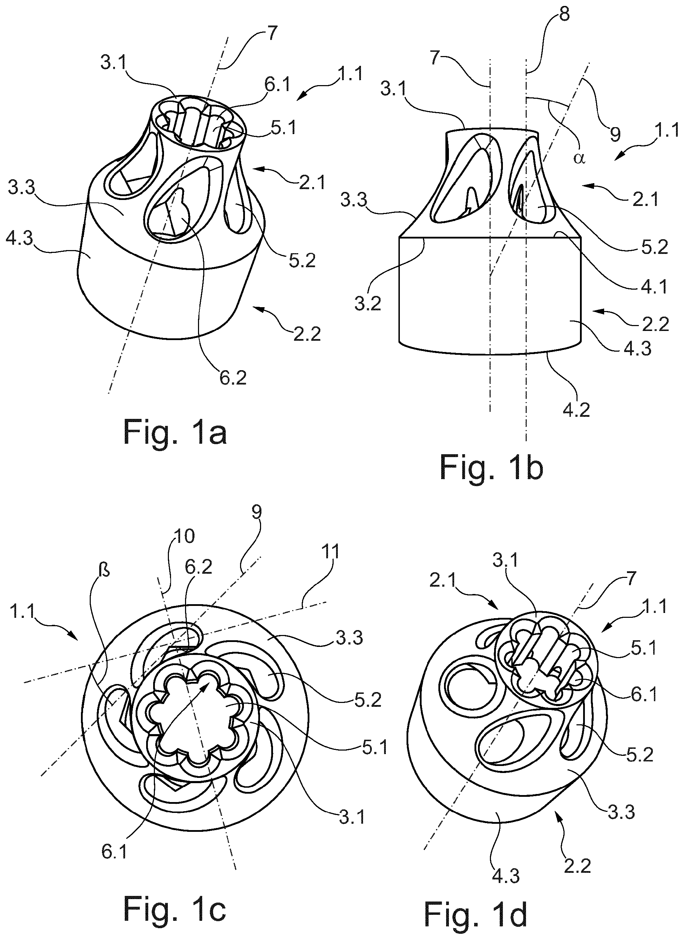

Die Figuren 1a bis 1d zeigen ein erstes Ausführungsbeispiel einer Düse 1.1. Die Düse 1.1 umfasst einen ersten Düsenabschnitt 2.1 sowie einen zweiten Düsenabschnitt 2.2. Der erste Düsenabschnitt 2.1 ist als hohler Kegelstumpf mit einer Deckfläche 3.1 und einer verdeckt dargestellten Grundfläche 3.2 ausgebildet. Eine Mantelfläche 3.3 des Kegelstumpfs ist dabei konkav verjüngend von der Grundfläche 3.2 zu der Deckfläche 3.1 ausgebildet. Der zweite Düsenabschnitt 2.2 ist als Hohlzylinder ausgebildet und schließt sich mit einer verdeckt dargestellten Deckfläche 4.1 an die Grundfläche 3.2 des ersten Düsenabschnitts 2.1 an. Weiterhin weist der zweite Düsenabschnitt 2.2 seinerseits eine verdeckt dargestellte Grundfläche 4.2 sowie eine Mantelfläche 4.3 auf.

Die Düse 1.1 weist einen erste Durchgriff auf, der in der Deckfläche 3.1 des ersten Düsenabschnitts 2.1 eine erste Düsenöffnung 5.1 ausbildet. Weiterhin weist die Düse 1.1 fünf zweite Durchgriffe auf, die auf einer Kreislinie um den erste Durchgriff angeordnet sind und in der Mantelfläche 3.3 zweite Düsenöffnungen 5.2 ausbilden. Der erste Durchgriff weist dabei eine Durchgriffsachse auf, die konzentrisch mit einer Mittelachse 7 der Düse 1.1 verläuft. An dem ersten Durchgriff sind weiterhin sieben mit dem ersten Durchgriff überlappende dritte Durchgriffe ausgebildet, die an Innenwandungen des ersten Durchgriffs eine Kontur mit Nuten 6.1 ausbilden. Die zweiten Durchgriffe weisen Durchgriffsachsen 9 auf, die jeweils gegenüber einer zu der Mittelachse 7 der Düse 1.1 parallelen Parallelachse 8 gekippt angeordnet sind. Dabei sind die Durchgriffssachsen 9 der zweiten Durchgriffe um eine senkrecht auf der Parallelachse 8 stehende und die Mittelachse 7 der Düse 1.1 schneidende erste Querachse 10 um einen ersten Kippwinkel α gekippt angeordnet. Weiterhin sind die Durchgriffsachsen 9 der zweiten Durchgriffe jeweils um eine senkrecht auf der Parallelachse 8 und senkrecht auf der ersten Querachse 10 stehende zweite Querachse 11 um einen zweiten Kippwinkel β gekippt angeordnet. Fig. 1d zeigt eine Ansicht in der Flucht einer der zweiten Durchgriffe, aus der der Verlauf der Durchgriffsachse 9 dieses zweiten Durchgriffs nochmals näher ersichtlich ist. Weiterhin ist aus Fig. 1a zu erkennen, dass die zweiten Durchgriffe 5.2 radial in eine innere Mantelfläche des zweiten Düsenabschnitts 2.2 hineinragen und dort eine Kontur mit Nuten 6.2 ausbilden.

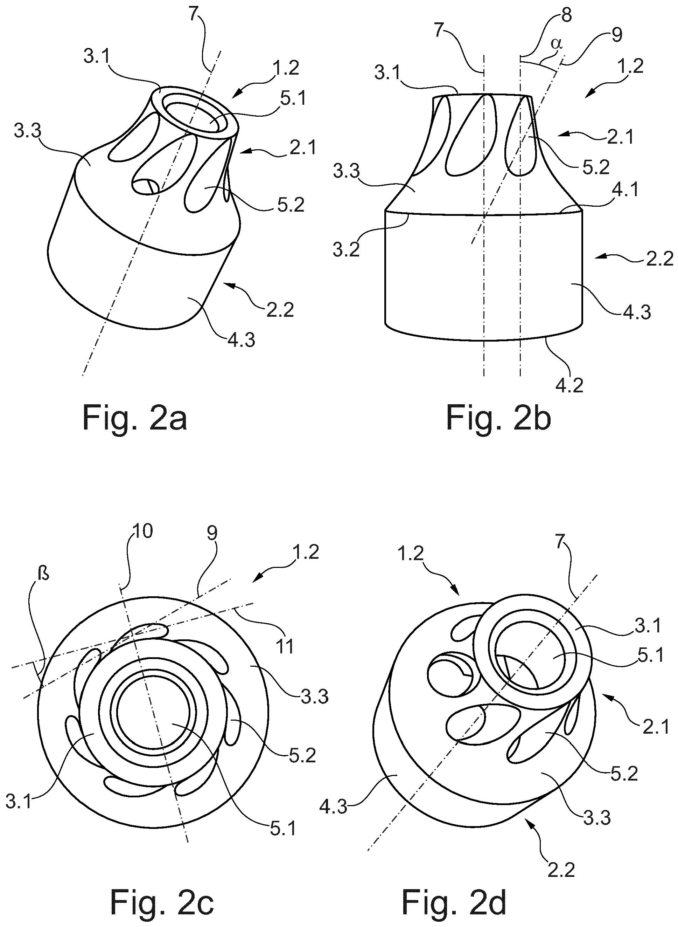

Die Figuren 2a bis 2d zeigen ein zweites Ausführungsbeispiel einer Düse 1.2, die der Düse 1.1 in ihren wesentlichen Merkmalen entspricht und sich insbesondere dadurch von der Düse 1.1 unterscheidet, dass sie sieben anstatt fünf zweite Durchgriffe bzw. zweite Düsenöffnungen 5.2 aufweist. Die zweiten Durchgriffe weisen dabei einen Querschnitt mit verringerter Größe auf. Weiterhin sind an der Düse 1.2 keine dritten Durchgriffe vorgesehen. Der erste Durchgriff weist insofern eine glatte Innenwandung auf. Auf eine wiederholende Beschreibung der sich gleichenden Merkmale der Düsen 1.1 und 1.2 wird verzichtet.

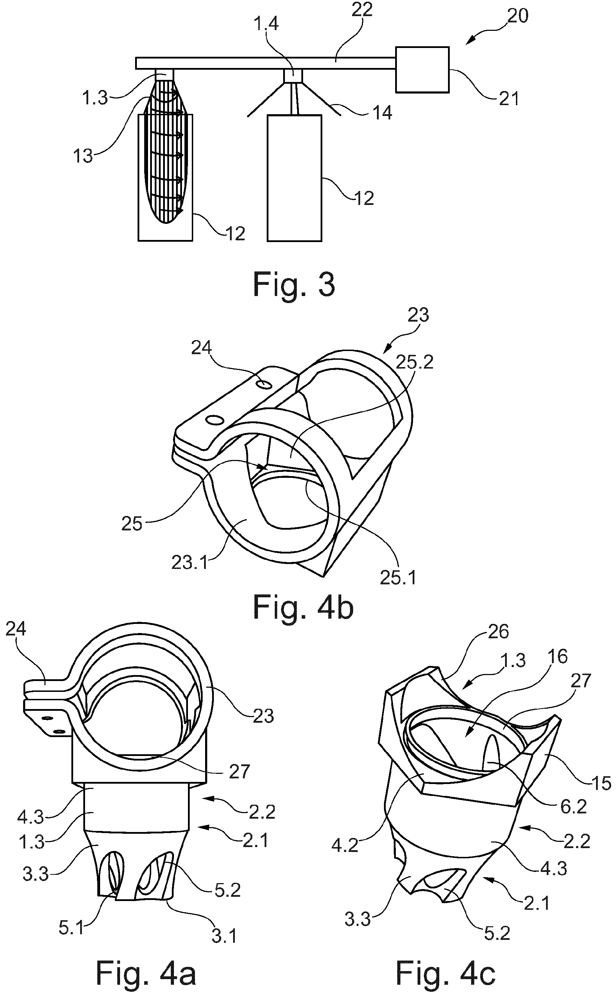

Figur 3 zeigt eine Düsenanordnung 20 in schematischer Darstellung mit einem Drucktank 21, einer mit dem Drucktank 21 verbundenen Zuleitung 22 sowie zwei an der Zuleitung 22 angeordneten Düsen 1.3 und 1.4. Die Düsen 1.3, 1.4 sind oberhalb von zylindrischen Filterelementen 12 angeordnet und dazu ausgerichtet, eine innere Mantelfläche der Filterelemente 12 zu reinigen. Die Düse 1.3 ist in ihren wesentlichen Merkmalen entsprechend den Düsen 1.1, 1.2 gemäß den Figuren 1a bis 2d ausgebildet und weist daher eine gebündelte Strömungskontur 13 auf, die in ihrem Durchmesser dem inneren Durchmesser des zylindrischen Filterelements 12 im Wesentlichen entspricht und somit besonders günstig zum Abscheren eines Filterkuchens an der inneren Mantelfläche des Filterelements 12 ausgebildet ist. In der Strömungskontur 13 ist die Helixform durch entsprechende Richtungspfeile dargestellt. Durch die Bündelung/Einschnürung der Strömungskontur 13 ist die Strömungskontur 13 näherungsweise über die gesamte Länge des Filterelements 12 stabil ausgebildet. Die Düse 1.4 hingegen ist nicht erfindungsgemäß, sondern nach dem Stand der Technik ausgebildet und weist eine sich kurz hinter der Düse 1.4 verlaufende und weit aufgefächerte Strömungskontur 14 auf, mittels der ein gezieltes Abscheren eines Filterkuchens an der inneren Mantelfläche des Filterelements 12 nur unzureichend oder mit sehr großen Drücken in dem Drucktank 21 möglich ist.

Die Figuren 4a bis 4c zeigen die Ausbildung einer an der Zuleitung 22 gehaltenen Düse 1.3 mittels einer Düsenhalterung 23 bzw. die Düsenhalterung 23 sowie die Düse 1.3 jeweils freigestellt. Die Düsenhalterung 23 ist als aufbiegbares, schellenförmiges Bauteil ausgebildet und mittels als Klemmmittel ausgebildeten Verbindungsmitteln 24 an einer runden Zuleitung 22 aufklemmbar. Die Düsenhalterung 23 weist weiterhin eine Aufnahme 25 für die Düse 1.3 auf, die einerseits durch eine runde Ausnehmung 25.1 zum Hindurchstecken der Düse 1.3 von einer Innenseite der Düsenhalterung 23 und andererseits von einer sechseckigen Ausnehmung 25.2 zum Formschluss mit einem Kragen 15 der Düse 1.3 gebildet ist. Die Ausnehmung 25.2 sowie der Kragen 15 können auch beliebige andere jeweils miteinander zum Formschluss korrespondierende Geometrien aufweisen.

Die Düse 1.3 weist an der Grundfläche 4.2 den Kragen 15 mit einer sechseckigen Außenkontur zum Formschluss mit der Ausnehmung 25.2 auf. Der Kragen 15 bildet dabei eine Ausnehmung 26 zum Anlegen an die Mantelfläche der Zuleitung 22 aus, derart, dass sich der Kragen 15 bei in der Düsenhalterung 23 von innen eingelegter Düse 1.3 in die Innenkontur 23.1 der Düsenhalterung 23 einfügt. Dabei weist die Düse 1.3 weiterhin einen in diese Innenkontur 23.1 der Düsenhalterung 23 hineinragenden Vorsprung 27 auf, der eine Einlassöffnung 16 der Düse 1.3 umgibt. Wie in Figur 4a zu erkennen ist, steht der Vorsprung 27 in die Düsenhalterung 23 hinein und ist somit dazu ausgebildet, in eine nicht dargestellte Zuleitungsöffnung einzugreifen und so die Flucht der Einlassöffnung 16 mit der Zuleitungsöffnung sicherzustellen bzw. die Öffnungen aneinander zu zentrieren.

Insgesamt ist die Düse 1.3 an der Düsenhalterung 23 positionsfest und verdrehsicher gehalten. Dabei ist die Düse 1.3 insbesondere durch die Zuleitung 22 in der Ausnehmung 25 gehalten, wenn die Düsenhalterung 23 auf der Zuleitung 22 montiert ist.

### Bezugszeichenliste

- 1.1: Düse
- 1.2: Düse
- 1.3: Düse
- 1.4: Düse
- 2.1: erster Düsenabschnitt
- 2.2: zweiter Düsenabschnitt
- 3.1: Deckfläche des ersten Düsenabschnitts
- 3.2: Grundfläche des ersten Düsenabschnitts
- 3.3: Mantelfläche des ersten Düsenabschnitts
- 4.1: Deckfläche des zweiten Düsenabschnitts
- 4.2: Grundfläche des zweiten Düsenabschnitts
- 4.3: Mantelfläche des zweiten Düsenabschnitts
- 5.1: erste Düsenöffnung
- 5.2: zweite Düsenöffnung
- 6.1: Nut
- 6.2: Nut
- 7: Mittelachse der Düse
- 8: Parallelachse
- 9: Durchgriffsachse des zweiten Durchgriffs
- 10: erste Querachse
- 11: zweite Querachse
- 12: Filterelement
- 13: Strömungskontur
- 14: Strömungskontur
- 15: Kragen
- 16: Einlassöffnung
- 20: Düsenanordnung
- 21: Drucktank
- 22: Zuleitung
- 23: Düsenhalterung
- 24: Verbindungsmittel
- 25: Aufnahme
- 25.1: Ausnehmung der Aufnahme
- 25.2: Ausnehmung der Aufnahme
- 26: Ausnehmung zum Anlegen an die Mantelfläche der Zuleitung
- 27: Vorsprung
- α: erster Kippwinkel
- β: zweiter Kippwinkel

## Patentansprüche

1. Düsenanordnung (20) zur Reinigung eines Filterelements (12) mittels einer Fluidströmung, aufweisend
eine rohrförmig ausgebildete Zuleitung (22) mit einer Zuleitungsöffnung in einer Mantelfläche der Zuleitung (22);
zumindest eine als Hohlkörper mit einer Grundfläche (4.2) ausgebildete Düse (1.1, 1.2, 1.3, 1.4), wobei die Düse (1.1, 1.2, 1.3, 1.4) in der Grundfläche (4.2) eine Einlassöffnung (16) aufweist; und
zumindest eine Düsenhalterung (23) mit einer Aufnahme (25) für die Düse (1.1, 1.2, 1.3, 1.4);
wobei die Düse (1.1, 1.2, 1.3, 1.4) an der Grundfläche (4.2) eine Ausnehmung (26) zum Anlegen an die Mantelfläche der Zuleitung (22) aufweist, derart, dass die Einlassöffnung (16) an der Zuleitung (22) anliegt und mit der Zuleitungsöffnung fluchtet;
wobei die Düse (1.1, 1.2, 1.3, 1.4) an der Aufnahme (25) der Düsenhalterung (23) lösbar gehalten und zentriert ist und die Düsenhalterung (23) an der Zuleitung lösbar gehalten ist;
wobei die Düse (1.1, 1.2, 1.3, 1.4) an der Düsenhaltung (23) formschlüssig gehalten ist und von einer durch die Zuleitung (22) verdeckten Innenseite der Düsenhalterung (23) in die Ausnehmung (25) einlegbar ist; und
wobei die Düse (1.1, 1.2, 1.3, 1.4) durch die Zuleitung (22) in der Ausnehmung (25) gehalten ist, wenn die Düsenhalterung (23) auf der Zuleitung (22) montiert ist.

2. Düsenanordnung (20) nach Anspruch 1, wobei die Düse (1.1, 1.2, 1.3, 1.4) einen Kragen (15) aufweist und mittels des Kragens (15) formschlüssig an der Düsenhalterung (23) gehalten ist.

3. Düsenanordnung (20) nach einem der Ansprüche 1 oder 2, wobei die Düsenhalterung (23) an der Zuleitung (22) kraftschlüssig gehalten ist und insbesondere schellenförmig an der Zuleitung (22) aufgeklemmt ist.

4. Düsenanordnung (20) nach Anspruch 3, wobei die Düsenhalterung (23) aufklappbar oder aufbiegbar ausgebildet ist und mittels Verbindungsmitteln (24) in einer zugeklappten/zugebogenen Stellung haltbar und auf der Zuleitung (22) aufklemmbar ausgebildet ist.

5. Düsenanordnung (20) nach einem der Ansprüche 1 bis 4, wobei die Düse (1.1, 1.2, 1.3, 1.4) einen in die Zuleitungsöffnung hineinragenden Vorsprung (27) an der Einlassöffnung (16) aufweist.

6. Düsenanordnung (20) nach einem der Ansprüche 1 bis 5, wobei die Düse (1.1, 1.2, 1.3) aufweist:
zumindest einen als hohlen Kegelstumpf ausgebildeten ersten Düsenabschnitt (2.1);
zumindest einen ersten Durchgriff, wobei der erste Durchgriff in einer Deckfläche (3.1) des ersten Düsenabschnitts (2.1) eine erste Düsenöffnung (5.1) ausbildet; und
eine Mehrzahl von den ersten Durchgriff umgebenden zweiten Durchgriffen, wobei die zweiten Durchgriffe in der Mantelfläche (3.3) des ersten Düsenabschnitts (2.1) zweite Düsenöffnungen (5.2) ausbilden;
wobei die zweiten Durchgriffe zum Aufprägen einer helixförmigen Strömungskontur (13) auf die Fluidströmung jeweils eine gegenüber einer zu der Mittelachse (7) der Düse (1.1, 1.2, 1.3) parallelen Parallelachse (8) gekippte Durchgriffsachse (9) aufweisen.

7. Düsenanordnung (20) nach Anspruch 6, wobei die zweiten Durchgriffe auf einer mit der Mittelachse (7) der Düse (1.1, 1.2, 1.3) konzentrischen Kreisbahn angeordnet sind.

8. Düsenanordnung (20) nach Anspruch 6 oder 7, wobei der erste Düsenabschnitt (2.1) eine konkav verjüngende Mantelfläche (3.3) aufweist.

9. Düsenanordnung (20) nach einem der Ansprüche 6 bis 8, aufweisend einen sich an eine Grundfläche (3.2) des ersten Düsenabschnitts (2.1) anschließenden, als Hohlzylinder ausgebildeten zweiten Düsenabschnitt (2.2), wobei insbesondere die zweiten Durchgriffe von innen radial nach außen in eine Außenwandung des zweiten Düsenabschnitts (2.2) zum Ausbilden einer Kontur an einer Innenseite der Außenwandung hineinragen.

10. Düsenanordnung (20) nach Anspruch 9, wobei der zweite Düsenabschnitt (2.2) an einer Grundfläche (4.2) eine Ausnehmung (26) zum Anlegen an eine winkelig zu der Mittelachse (7) der Düse (1.1, 1.2, 1.3) verlaufenden Zylinderkontur und insbesondere einen Kragen (15) aufweist.

11. Düsenanordnung (20) nach einem der Ansprüche 6 bis 10, wobei die Durchgriffsachsen (9) der zweiten Durchgriffe jeweils um eine senkrecht auf der Parallelachse (8) stehende und die Mittelachse (7) der Düse (1.1, 1.2, 1.3) schneidende erste Querachse (10) um einen ersten Kippwinkel (α) gekippt angeordnet sind, wobei insbesondere der erste Kippwinkel (α) 0 bis 45°, besonders bevorzugt 23°, beträgt.

12. Düsenanordnung (20) nach einem der Ansprüche 6 bis 11, wobei die Durchgriffsachsen (9) der zweiten Durchgriffe jeweils um eine senkrecht auf der Parallelachse (8) und senkrecht auf der ersten Querachse (10) stehende zweite Querachse (11) um einen zweiten Kippwinkel (β) gekippt angeordnet sind, wobei insbesondere der zweite Kippwinkel (β) 0 bis 90°, besonders bevorzugt 45°, beträgt.

13. Düsenanordnung (20) nach einem der Ansprüche 6 bis 12, wobei ein Verjüngungsverhältnis zwischen einem Einlassquerschnitt und einem Auslassquerschnitt der Düse (1.1, 1.2, 1.3) zwischen 1:1 und 3:1 beträgt.

14. Düsenanordnung (20) nach einem der Ansprüche 6 bis 13, wobei der erste Durchgriff rund ausgebildet ist und einen Durchmesser von 1 bis 70% eines Düsendurchmessers aufweist und/oder wobei die zweiten Durchgriffe jeweils rund ausgebildet sind und einen Durchmesser von 1 bis 70% des Düsendurchmesser aufweisen.

## Claims

1. Nozzle assembly (20) for cleaning a filter element (12) by means of a fluid flow, comprising
a tubular supply line (22) with a supply line opening in a shell surface of the supply line (22);
at least one nozzle (1.1, 1.2, 1.3, 1.4) designed as a hollow body with a base surface (4.2), wherein the nozzle (1.1, 1.2, 1.3, 1.4) has an inlet opening (16) in the base surface (4.2); and
at least one nozzle holder (23) with a receptacle (25) for the nozzle (1.1, 1.2, 1.3, 1.4);
wherein the nozzle (1.1, 1.2, 1.3, 1.4) on the base surface (4.2) has a recess (26) for fitting to the shell surface of the supply line (22), such that the inlet opening (16) is against the supply line (22) and is aligned with the supply line opening;
wherein the nozzle (1.1, 1.2, 1.3, 1.4) is detachably held and centered on the receptacle (25) of the nozzle holder (23) and the nozzle holder (23) is detachably held on the supply line;
wherein the nozzle (1.1, 1.2, 1.3, 1.4) is held in a positive fit at the nozzle holder (23) and can be inserted into the recess (25) by an inner side of the nozzle holder (23) covered by the supply line (22); and
wherein the nozzle (1.1, 1.2, 1.3, 1.4) is held through the supply line (22) in the recess (25) when the nozzle holder (23) is mounted on the supply line (22).

2. Nozzle assembly (20) according to claim 1, wherein the nozzle (1.1, 1.2, 1.3, 1.4) has a collar (15) and is held in a form-fit on the nozzle holder (23) by means of the collar (15).

3. Nozzle assembly (20) according to one of claims 1 or 2, wherein the nozzle holder (23) is held in a force-fit manner on the supply line (22) and in particular is connected in a clip-on form to the supply line (22).

4. Nozzle assembly (20) according to claim 3, wherein the nozzle holder (23) is designed to be hinged or bendable and is designed to be held in a folded/bent position by means of connecting means (24) and to be clamped onto the supply line (22).

5. Nozzle assembly (20) according to one of claims 1 to 4, wherein the nozzle (1.1, 1.2, 1.3, 1.4) has a projection (27) at the inlet opening (16) projecting into the supply opening.

6. Nozzle assembly (20) according to one of claims 1 to 5, wherein the nozzle (1.1, 1.2, 1.3) comprises:
at least one first nozzle section (2.1) designed as hollow truncated cone;
at least one first passage, wherein the first passage forms a first nozzle opening (5.1) in a cover surface (3.1) of the first nozzle section (2.1); and
a plurality of second passages surrounding the first passage, wherein the second passages form second nozzle openings (5.2) in the shell surface (3.3) of the first nozzle section (2.1);
wherein the second passages for imprinting a helical flow contour (13) onto the fluid flow each have a passage axis (9) tilted relative to a parallel axis (8) parallel to the central axis (7) of the nozzle (1.1, 1.2, 1.3).

7. Nozzle assembly (20) according to claim 6, wherein the second passages are arranged on a circular path concentric with the central axis (7) of the nozzle (1.1, 1.2, 1.3).

8. Nozzle assembly (20) according to claim 6 or 7, wherein the first nozzle section (2.1) has a concave tapered shell surface (3.3).

9. Nozzle assembly (20) according to one of claims 6 to 8, comprising a second nozzle section (2.2) designed as a hollow cylinder adjoining a base surface (3.2) of the first nozzle section (2.1), wherein in particular the second passages project radially outwards from the inside into an outer wall of the second nozzle section (2.2) to form a contour on an inner side of the outer wall.

10. Nozzle assembly (20) according to claim 9, wherein the second nozzle section (2.2) has a recess (26) on a base surface (4.2) for contact with a cylindrical contour extending at an angle to the central axis (7) of the nozzle (1.1, 1.2, 1.3) and in particular has a collar (15).

11. Nozzle assembly (20) according to one of claims 6 to 10, wherein the passage axes (9) of the second passages are each arranged tilted by a first tilt angle (α) about a first transverse axis (10) which is perpendicular to the parallel axis (8) and intersects the central axis (7) of the nozzle (1.1, 1.2, 1.3), wherein, in particular, the first angle of inclination (α) is 0 to 45°, and particularly preferably 23°.

12. Nozzle assembly (20) according to any one of claims 6 to 11, wherein the passage axes (9) of the second passages are each arranged at a second tilt angle (β) relative to a second transverse axis (11) which is perpendicular to the parallel axis (8) and perpendicular to the first transverse axis (10), wherein, in particular, the second tilt angle (β) is 0 to 90°, particularly preferably 45°.

13. Nozzle assembly (20) according to one of claims 6 to 12, wherein a taper ratio between an inlet cross-section and an outlet cross-section of the nozzle (1.1, 1.2, 1.3) is between 1:1 and 3:1.

14. Nozzle assembly (20) according to one of claims 6 to 13, wherein the first passage is round and has a diameter of 1 to 70% of a nozzle diameter and / or wherein the second passages are each round and have a diameter of 1 to 70% of the nozzle diameter.

## Revendications

1. Ensemble buse (20) pour le nettoyage d'un élément filtrant (12) au moyen d'un écoulement de fluide, comprenant
une conduite d'alimentation en forme de tube (22) comportant un orifice d'alimentation dans une surface gainante de la conduite d'alimentation (22);
au moins une buse (1.1, 1.2, 1.3, 1.4) conçue comme un corps creux présentant une surface de base (4.2), dans lequel la buse (1.1, 1.2, 1.3, 1.4) comporte une ouverture d'entrée (16) dans la surface de base (4.2); et
au moins un support de buse (23) comportant un logement (25) destiné à recevoir la buse (1.1, 1.2, 1.3, 1.4);
dans lequel la buse (1.1, 1.2, 1.3, 1.4) présente sur la surface de base (4.2) un évidement (26) destiné au contact avec la surface gainante de la conduite d'alimentation (22), de telle sorte que l'ouverture d'entrée (16) soit en contact avec la conduite d'alimentation (22) et soit alignée avec l'orifice d'alimentation;
dans lequel la buse (1.1, 1.2, 1.3, 1.4) est maintenue de manière amovible et centrée sur le logement (25) du support de buse (23) et le support de buse (23) est maintenu de manière amovible sur la conduite d'alimentation;
dans lequel la buse (1.1, 1.2, 1.3, 1.4) est maintenue par liaison de forme sur le support de buse (23) et peut être insérée dans l'évidement (25) à partir d'une face intérieure du support de buse (23) dissimulée par la conduite d'alimentation (22); et
dans lequel la buse (1.1, 1.2, 1.3, 1.4) est maintenue par la conduite d'alimentation (22) dans l'évidement (25) lorsque le support de buse (23) est monté sur la conduite d'alimentation (22).

2. Ensemble buse (20) selon la revendication 1, dans lequel la buse (1.1, 1.2, 1.3, 1.4) comporte une collerette (15) et est maintenue par liaison de forme sur le support de buse (23) au moyen de la collerette (15).

3. Ensemble buse (20) selon l'une des revendications 1 ou 2, dans lequel le support de buse (23) est maintenu par adhérence sur la conduite d'alimentation (22) et en particulier, est fixé par collier sur la conduite d'alimentation (22).

4. Ensemble buse (20) selon la revendication 3, dans lequel le support de buse (23) est conçu pour être rabattu ou replié et est agencé de manière à pouvoir être maintenu dans une position rabattue/repliée à l'aide de moyens de connexion (24) et à pouvoir être fixé sur la conduite d'alimentation (22).

5. Ensemble buse (20) selon l'une des revendications 1 à 4, dans lequel la buse (1.1, 1.2, 1.3, 1.4) comporte une saillie (27) au niveau de l'ouverture d'entrée (16) faisant saillie dans l'orifice d'alimentation.

6. Ensemble buse (20) selon l'une des revendications 1 à 5, dans lequel la buse (1.1, 1.2, 1.3) comprend:
au moins une première section de buse (2.1) conçue comme un cône tronqué creux;
au moins un premier passage, dans lequel le premier passage forme une première ouverture de buse (5.1) dans une surface de couverture (3.1) de la première section de buse (2.1); et
une pluralité de deuxièmes passages entourant le premier passage, dans lequel les deuxièmes passages forment des deuxièmes ouvertures de buse (5.2) dans la surface gainante (3.3) de la première section de buse (2.1);
dans lequel les deuxièmes passages pour imprimer un contour hélicoïdal (13) sur l'écoulement du fluide comportent chacun un axe de passage (9) incliné par rapport à un axe parallèle (8) parallèle à l'axe central (7) de la buse (1.1, 1.2, 1.3).

7. Ensemble buse (20) selon la revendication 6, dans lequel les deuxièmes passages sont disposés sur une trajectoire circulaire concentrique avec l'axe central (7) de la buse (1.1, 1.2, 1.3).

8. Ensemble buse (20) selon la revendication 6 ou 7, dans lequel la première section de buse (2.1) comporte une surface gainante concave (3.3).

9. Ensemble buse (20) selon l'une des revendications 6 à 8 comprenant une deuxième section de buse (2.2) conçue comme un cylindre creux et raccordée à une surface de base (3.2) de la première section de buse (2.1), dans lequel en particulier les deuxièmes passages s'étendent radialement vers l'extérieur depuis l'intérieur dans une paroi extérieure de la deuxième section de buse (2.2) pour former un contour sur un côté intérieur de la paroi extérieure.

10. Ensemble buse (20) selon la revendication 9, dans lequel la deuxième section de buse (2.2) comporte un évidement (26) sur une surface de base (4.2) destiné au contact avec un contour de cylindre s'étendant à un angle par rapport à l'axe central (7) de la buse (1.1, 1.2, 1.3) et en particulier comporte une collerette (15).

11. Ensemble buse (20) selon l'une des revendications 6 à 10, dans lequel les axes de passage (9) des deuxièmes passages sont chacun disposés de manière inclinée selon un premier angle d'inclinaison (α) par rapport à un premier axe transversal (10) perpendiculaire à l'axe parallèle (8) et coupant l'axe central (7) de la buse (1.1, 1.2, 1.3), en particulier, dans lequel le premier angle d'inclinaison (α) est de 0 à 45°, de préférence de 23°.

12. Ensemble buse (20) selon l'une des revendications 6 à 11, dans lequel les axes de passage (9) des deuxièmes passages sont disposés de manière inclinée selon un deuxième angle d'inclinaison (β) par rapport à un deuxième axe transversal (11), perpendiculaire à l'axe parallèle (8) et perpendiculaire au premier axe transversal (10), dans lequel, en particulier, le deuxième angle d'inclinaison (β) est de 0 à 90°, de préférence de 45°.

13. Ensemble buse (20) selon l'une des revendications 6 à 12, dans lequel un rapport de rétrécissement entre une section transversale d'entrée et une section transversale de sortie de la buse (1.1, 1.2, 1.3) est compris entre 1:1 et 3:1.

14. Ensemble buse (20) selon l'une des revendications 6 à 13, dans lequel le premier passage est rond et présente un diamètre de 1 à 70% par rapport à un diamètre de la buse et/ou dans lequel les deuxièmes passages sont chacun ronds et présentent un diamètre de 1 à 70% par rapport au diamètre de la buse.
